# EUROPÄISCHE PATENTSCHRIFT

(11) **EP 0 906 819 B1**
(45) Veröffentlichungstag und Bekanntmachung des Hinweises auf die Patenterteilung: **07.11.2001**
(21) Anmeldenummer: 98114703.6
(22) Anmeldetag: 05.08.1998
(51) Int. Cl.: B29C 45/17

(54) **Verfahren und Vorrichtung zum Spritzgiessen von Kunststoffgegenständen**
Method and apparatus for injection moulding of plastic articles
Procédé et dispositif de moulage par injection d'articles en matière plastique

(30) Priorität: 04.10.1997 DE 19743838
(43) Veröffentlichungstag der Anmeldung: 07.04.1999
(73) Patentinhaber: Battenfeld GmbH, D-58540 Meinerzhagen (DE)
(72) Erfinder: Eckart, Helmut, Dipl.-Ing., 58540 Meinerzhagen (DE); Gosdin, Michael, Dr., 58540 Meinerzhagen (DE)
(74) Vertreter: Gosdin, Michael, Dr.

(56) Entgegenhaltungen:
- WO-A-93/14918
- DE-A- 19 516 290
- GB-A- 2 278 308
- PATENT ABSTRACTS OF JAPAN vol. 98, no. 8, 30. Juni 1998 & JP 10 058493 A (SONY CORP; RIYOUKA KOGYO KK), 3. März 1998
- PATENT ABSTRACTS OF JAPAN vol. 9, no. 94 (M-374), 24. April 1985 & JP 59 220338 A (ICHIKO KOGYO KK), 11. Dezember 1984

## Beschreibung

Die Erfindung betrifft ein Verfahren zum Spritzgießen von Kunststoffgegenständen aus thermoplastischem, duroplastischem oder elastomerem Material, das die Schritte aufweist:
- Einspritzen einer ausreichenden Menge Kunststoffschmelze in die Kavität eines Formwerkzeugs entlang eines Schmelzefließwegs, der sich von einer Kunststoffplastifizier- und -einspritzeinheit durch eine Kunststoffeinspritzdüse bis ins Formwerkzeug erstreckt;
- Eingeben eines Druckfluids, insbesondere eines Druckgases, von einer Wandung der Kavität aus mittels mindestens eines Fluideinspritzelements, so daß sich ein Fluidpolster zwischen Wandung der Kavität und der ins Formwerkzeug eingebrachten Schmelze bildet;
- Erhärtenlassen des so hergestellten Formteils;
- Entlastung der Kavität vom Druck des Druckfluids; und
- Entformen des Formteils.

Des weiteren betrifft die Erfindung eine Vorrichtung zur Durchführung des Verfahrens.

Ein gattungsgemäßes Verfahren ist in der DE 195 16 290 C2 beschrieben. Dort wird nach der Eingabe von Schmelze in die Formkavität Druckgas mittels einer Fluideinspritzdüse injiziert, so daß sich zwischen der Kavitätswandung und dem Kunststoff ein Fluidpolster aufbaut. Zum Einsatz kommt dort eine Gasdüse mit einer spaltförmigen Öffnung. In der Schrift wird erkannt, daß es wichtig ist, dafür Sorge zu tragen, daß sich das Gaspolster nur in dem gewünschten Bereich ausbildet. Deswegen ist vorgesehen, daß Einschnürungen bzw. Wälle dafür sorgen, daß sich das Gaspolster nicht über den vorgesehenen Bereich ausbreiten kann.

Ein weiteres Verfahren der eingangs genannten Art ist aus der WO 90/06220 bekannt. Auch dort wird zunächst eine für die Ausbildung des Formteils ausreichende Menge Kunststoffschmelze in die Kavität eines Spritzgießwerkzeugs eingebracht. Da auch hier der Kunststoff während des Abkühlprozesses einer Schrumpfung unterliegt, kann es ohne besondere Vorkehrungen zu Einfallstellen kommen. Zu deren Vermeidung wird auch hier Druckgas als Polster zwischen Kavitätsoberfläche und Kunststoffschmelze eingebracht. Damit das Polster gezielt aufgebaut und - nach der Erhärtung der Schmelze - wieder abgebaut werden kann, sind zwei Lösungsmöglichkeiten beschrieben:

Zum einen sind Ventile vorgesehen, die über einen entsprechenden Ventilsitz eine Gasabdichtung ermöglichen. Durch die Betätigung (axiale Verstellung) des Ventilschaftes kann das Ventil wahlweise auf "offen" oder "zu" gestellt werden, womit in Kombination mit einer entsprechenden Gasregelung das gewünschte Gaspolster auf- und abgebaut werden kann.

Alternativ ist vorgesehen, daß poröses Sintermetall zum Einsatz kommt. An der Übergangsstelle im Werkzeug, an der das Gaspolster erzeugt werden soll, ist ein poröses Metallelement vorgesehen, durch das Druckgas hindurchströmen kann; dies gilt jedoch nicht für die Kunststoffschmelze, wodurch eine gezielte Begasung ohne Rückströmen von Schmelze erreicht werden kann. Detaillierte Angaben darüber, wie die Gasblase begrenzt werden kann, finden sich in der Schrift nicht.

Hier liefert die WO 93/01039 weitere Anhaltspunkte: Diese Schrift beschäftigt sich wie die DE 195 16 290 mit dem Frage, wie erreicht werden kann, daß sich das zwischen Kavitätsoberfläche und Kunststoffschmelze eingebrachte Gaspolster nicht unerwünscht ausbreitet und an Stellen zur Wirkung kommt, wo dies nicht erwünscht ist. Lösungsgemäß wird dort vorgeschlagen, eine Aufrauhung der Kavitätsoberfläche an den Stellen vorzusehen, wo sich das Gaspolster aufbauen soll. Die Oberflächen-Stellen, die an das Gaspolster angrenzen, jedoch selber nicht mehr durch dieses beaufschlagt werden sollen, sind glatt ausgeführt. Es wird also durch Aufrauhung der Oberfläche der Bereich definiert, in dem sich das Gaspolster ausbilden und wirken soll.

Die für die Begrenzung des Gaspolsters vorgeschlagenen Lösungen sind jedoch nicht in allen Fällen anwendbar bzw. erfolgreich.

Der vorliegenden Erfindung liegt daher die **Aufgabe** zugrunde, ein weiterentwickeltes Verfahren und eine zugehörige Vorrichtung der gattungsgemäßen Art zu schaffen, die es ermöglichen, eine genau definierte Begrenzung für das Gaspolster zu erreichen, so daß es sich nur in einem gewünschten Bereich ausbreiten kann. Das Verfahren und die Vorrichtung sollen produktionssicher arbeiten und einfach anzuwenden sein.

Die **Lösung** der Aufgabe durch die Erfindung ist dadurch gekennzeichnet, daß im Formwerkzeug (1) mindestens eine flächige Erhebung (9) vorgesehen wird,
- die auf der Kavitätswandung (7) aufgebracht ist und
- die im Bereich ihres oberen Plateaus (10) weitgehend parallel zur Kavitätswandung (7) in dem Bereich verläuft, in dem die Erhebung (9) angeordnet ist,
wobei das Druckfluid derart über mindestens ein Fluideinspritzelement (6) in den Bereich des oberen Plateaus (10) der flächigen Erhebung (9) injiziert wird, daß sich das Fluidpolster (8) zwischen Kunststoff und oberem Plateau (10) der flächigen Erhebung (9) ausbildet.

Dem Verfahren liegt die Erkenntnis zugrunde, daß an der Stelle, an der das Gaspolster zwischen Kavitätswand und Kunststoff wirkt, ohnehin keine gute Oberfläche des Formteils erzielbar ist. Daher wird in diesem Bereich über eine definierte Fläche ein erhöhtes Plateau angeordnet, das durch seine Seitenfläche eine Gasabdichtung bewerkstelligt, so daß sich das Gaspolster nur im Bereich des oberen Plateaus bilden kann; die Gasblase kann sich nicht über den Bereich der flächigen Erhebung ausbreiten, da die Begasung nur im Bereich des oberen Plateaus erfolgt.

Zur Sicherstellung, daß sich die Gasblase nicht über das obere Plateau der flächigen Erhebung ausbreitet, ist weiterhin vorgesehen, daß die Seitenbereiche (11) der flächigen Erhebung (9) temperiert werden, so daß das Erstarrungsverhalten des Kunststoffes dort beeinflußt werden kann. Abhängig davon, ob Thermoplast oder Duroplast verarbeitet wird, kann es sinnvoll sein, daß die Seitenbereiche (11) für eine vorbestimmte Zeit beheizt oder gekühlt werden.

Werden beispielsweise bei der Verarbeitung eines Thermoplasts die Seitenbereiche für eine bestimmte Zeit gekühlt, findet dort eine schnellere Erstarrung des Kunststoffs statt. Die erstarrten Bereiche dichten den Bereich ab, in dem sich das Gaspolster befindet, so daß eine Ausbreitung des Polsters ausgeschlossen ist.

Vorteilhafterweise ist weiterhin vorgesehen, daß das Einspritzen von Schmelze derart erfolgt, daß vor der Eingabe von Druckfluid zwischen die Wandung (7) der Kavität (2) und die Schmelze die Werkzeugkavität (2) vollständig mit Schmelze mit einem solchen Schmelzedruck gefüllt wird, daß das Kunststoffmaterial während der ersten Phase der Erstarrung druckvorgespannt bleibt. Damit wird die gesamte Oberfläche der flächigen Erhebung zunächst zuverlässig in Kontakt mit der Kunststoffschmelze gebracht, so daß definierte Randbedingungen geschaffen sind, um das erfindungsgemäße Verfahren anzuwenden. Dies würde freilich nicht notwendigerweise sichergestellt sein, wenn nur eine Teilfüllung der Kavität vorgenommen würde, da dann womöglich die abdichtenden Seitenbereiche der flächigen Erhebung nicht völlig mit Schmelze umgeben wären, was zum Versagen des vorgeschlagenen Verfahrens führen würde.

Fortbildungsgemäß ist weiterhin vorgesehen, daß die Zufuhr von Fluid durch das Fluideinspritzelement (6) in Abhängigkeit des in der Kavität (2) herrschenden Drucks und/oder in Abhängigkeit der seit dem Beginn des Einspritzens von Schmelze verstrichenen Zeit und/oder in Abhängigkeit des Einspritzweges der Schnecke (5) gesteuert oder geregelt wird. Weiterhin kann der Druck des Druckfluids, das über das Fluideinspritzelement (6) in die Kavität (2) eingebracht wird, gemäß einem vorgegebenen zeitlichen Profil gesteuert oder geregelt werden.

Die erfindungsgemäße Vorrichtung weist auf:
- ein aus mindestens zwei Hälften bestehendes Formwerkzeug (1) mit einer Kavität (2);
- eine Kunststoffplastifizier- und -einspritzeinheit (4, 5), die Kunststoffschmelze produziert und von der aus diese Schmelze über eine Kunststoffeinspritzdüse (3) bis in die Kavität (2) des Formwerkzeugs (1) gelangt; und
- mindestens ein Fluideinspritzelement (6), das Druckfluid, insbesondere Druckgas, von einer Wandung (7) der Kavität (2) aus in die Kavität einleitet, so daß sich ein Fluidpolster (8) zwischen Wandung (7) und der ins Formwerkzeug (1) eingebrachten Schmelze bildet.

Sie ist gekennzeichnet durch mindestens eine flächige Erhebung (9),
die auf der Kavitätswandung (7) aufgebracht ist und
die im Bereich ihres oberen Plateaus (10) weitgehend parallel zur Kavitätswandung (7) in dem Bereich verläuft, in dem die Erhebung (9) angeordnet ist,
wobei in die flächige Erhebung (9) mindestens ein Fluideinspritzelement (6) derart integriert ist, daß sich nach Gasinjektion durch das Fluideinspritzelement (6) das Fluidpolster (8) zwischen Kunststoff und oberem Plateau (10) der flächigen Erhebung (9) ausbildet.

Wie bereits oben erläutert sind vorteilhafterweise im Seitenbereich (11) der flächigen Erhebung (9) Temperierelemente (12) angeordnet, mit denen die Temperatur des Kunststoffes dort beeinflußt werden kann, wobei die Temperierelemente (12) Heizelemente oder Kühlelemente sein können.

Möglich ist es, daß die Fluideinspritzdüsen (6) in ihrem Endbereich eine spaltförmige Öffnung (13) aufweisen und die Fluideinspritzdüse (6) so angeordnet ist, daß sie mit dem oberen Plateau (10) der flächigen

Erhebung (9) bündig abschließt. Alternativ kann auch vorgesehen sein, daß die Fluideinspritzdüsen (6) in ihrem Endbereich aus mikroporösem Metall bestehen und die Fluideinspritzdüse (6) so angeordnet ist, daß sie mit dem oberen Plateau (10) der flächigen Erhebung (9) bündig abschließt.

Die flächige Erhebung (9) hat vorzugsweise einen im wesentlichen rechteckigen Grundriß. Weiterhin können mehrere solcher flächigen Erhebungen (9) vorgesehen sein, die an einer Stelle (14) zusammenlaufen. In diesem Falle ist vorteilhafterweise den mehreren flächigen Erhebungen (9) eine gemeinsame Fluideinspritzdüse (6) zugeordnet, die an der Zusammenlaufstelle (14) angeordnet ist.

In der Zeichnung sind erfindungsgemäße Ausführungsbeispiele dargestellt:
- Figur 1: zeigt schematisch die erfindungsgemäße Spritzgießvorrichtung,
- Figur 2: zeigt in perspektivischer Ansicht die Oberfläche der Kavität mit einer flächigen Erhebung,
- Figur 3: stellt im Querschnitt detailliert die flächige Erhebung dar, in
- Figur 4: ist eine perspektivische Ansicht der Kavitätsoberfläche mit mehreren flächigen Erhebungen zu sehen,
- Figur 5: zeigt die Anordnung einer flächigen Erhebung bei einem speziellen Formteil in der Draufsicht und
- Figur 6: stellt verschiedene Ausbildungen der flächigen Erhebung dar.

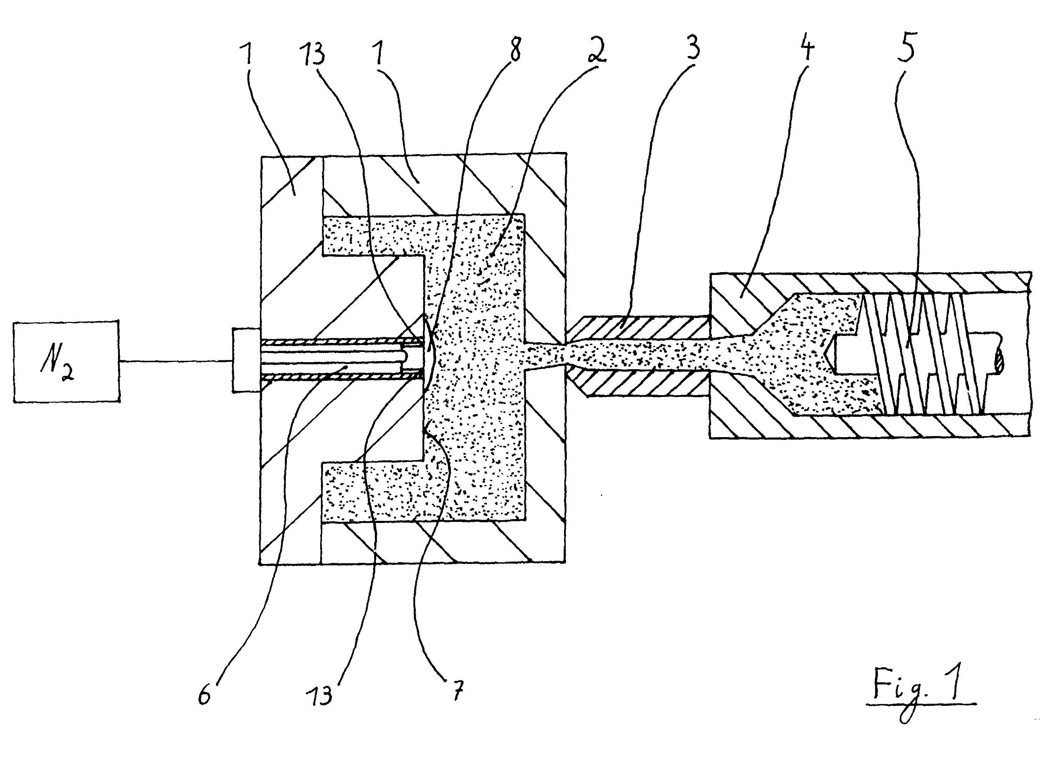

In Figur 1 ist - schematisch dargestellt - eine Spritzgießvorrichtung zu sehen. Das zweiteilige Spritzgießwerkzeug 1 weist eine Kavität 2 auf, die die Geometrie des zu fertigenden Formteils definiert. Die Kavität 2 wird mit Schmelze versorgt, die in einer Kunststoffplastifizier- und -einspritzeinheit (bestehend aus Schnecke 5 und Schneckenzylinder 4) hergestellt wird; die Schmelze wird über eine Kunststoffeinspritzdüse 3 ins Werkzeug 1 injiziert.

Im Bereich einer der Kavitätswände ist eine Fluideinspritzdüse 6 angeordnet. Ihre Gasaustrittsöffnung besteht aus einer spaltförmigen Öffnung 13. Damit ist es möglich, bei mit Schmelze gefüllter Kavität Stickstoffgas (N₂) zwischen die Wandung 7 der Kavität 2 und die Schmelze zu bringen, so daß sich ein Fluidpolster 8 bildet.

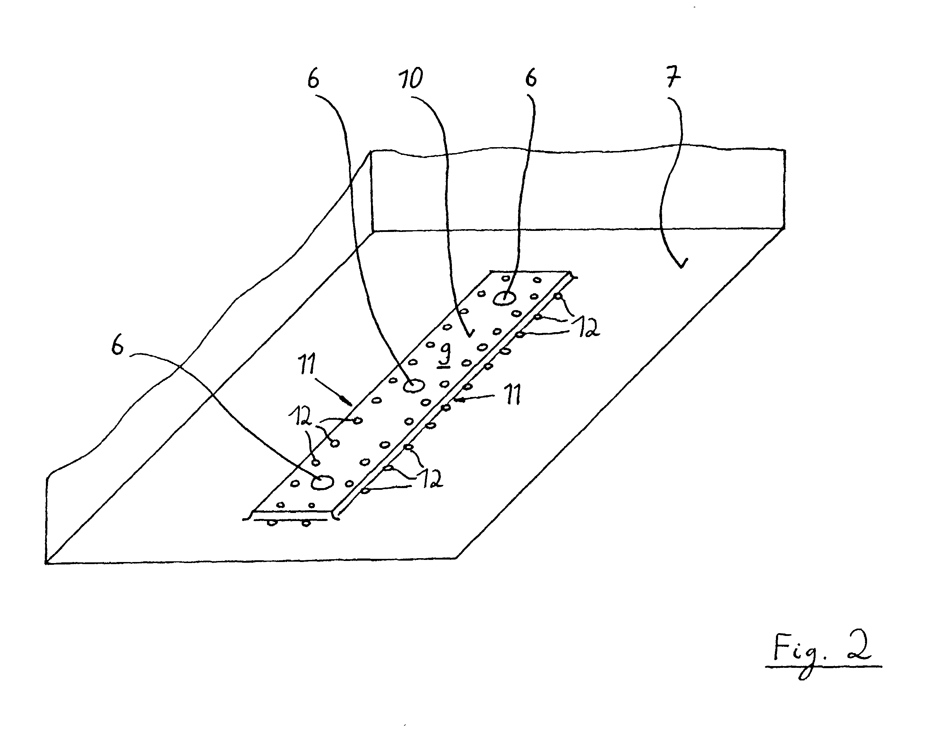

Damit sich das Gaspolster 8 nur in einem gewüschten Bereich ausbreiten kann, ist erfindungsgemäß folgendes vorgesehen: auf der Wandung 7 der Kavität 2 ist - s. Fig. 2 - eine flächige Erhebung 9 angeordnet. Es kann sich hier um eine entsprechende Ausbildung handeln, die bei der Herstellung des Formwerkzeugs in die Kavität eingearbeitet worden ist. Möglich ist es aber auch, daß die Erhebung 9 nachträglich auf die Kavitätsoberfläche aufgebracht worden ist. Die flächige Erhebung besteht, wie es gut in Fig. 2 zu sehen ist, aus einer Erhebung, die ein oberes Plateau 10 aufweist, das parallel zur Kavitätswand 7 verläuft. Seitenbereiche 11 schaffen den Übergang von dem tieferliegenden Niveau der Kavitätsoberfläche 7 und dem Niveau des oberen Plateaus 10.

Die Höhe des oberen Plateaus 10 über der Kavitätsoberfläche 7 ist meist nicht sehr groß: Die flächige Erhebung ist meist nur wenig mehr als 1 Millimeter hoch. In Extremfällen kann die Höhe freilich auch weniger als 0,15 Millimeter oder bis zu 5 Milimeter betragen, was vom jeweiligen Formteil abhängt.

In den Bereich des oberen Plateaus ist mindestens eine Fluideinspritzdüse 6 integriert, im gezeigten Fall sind es drei Düsen 6. Um ein Abdichten zwischen der Wandung 7 der Kavität und dem oberen Plateau 10 sicherzustellen, sind im Seitenbereich 11 der flächigen Erhebung 9 mehrere Temperierelemente 12 angeordnet. Durch entsprechende Beaufschlagung der Temperierelemente (Heizen oder Kühlen) kann die Konsistenz des Kunststoffs beeinflußt werden. Dabei ist es zum einen möglich, beispielsweise bei der Thermoplastverarbeitung eine Erwärmung der Seitenbereiche vorzunehmen, um - in Verbindung mit einem genügend hohen Schmelzenachdruck - die Abdichtung durch flüssigen Kunststoff zu bewerkstelligen; andererseits kann auch umgekehrt durch Kühlung ein Erstarren erreicht werden, so daß sich das Gaspolster nicht über diesen Bereich ausdehnen kann.

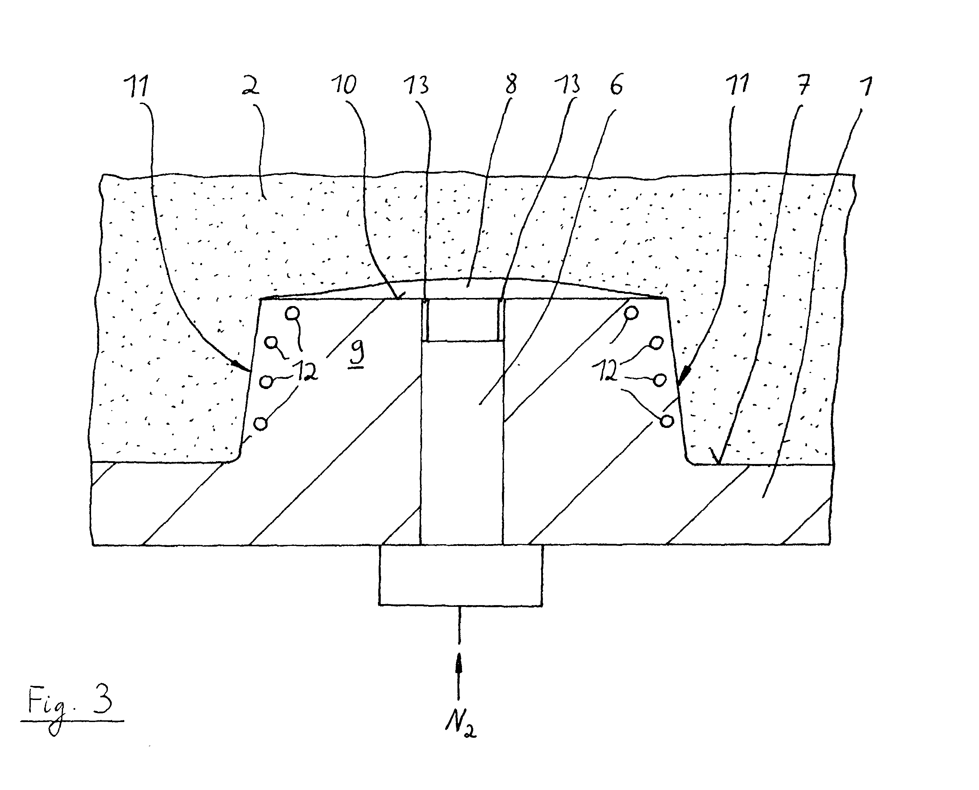

Diese Verhältnisse sind in Fig. 3 nochmals detailliert zu sehen. Hier ist im Querschnitt eine Vergrößerung des Bereichs der flächigen Erhebung 9 zu sehen. In das Formwerkzeug 1 ist im Wandbereich eine Bohrung für die Fluideinspritzdüse 6 eingebracht. Auf der Wandung 7 der Kavität 2 ist die flächige Erhebung 9 angeordnet. Das Austrittsende der Fluideinspritzdüse 6, nämlich die spaltförmige Öffnung 13, schließt bündig mit dem oberen Plateau 10 der flächigen Erhebung 9 ab. Die Seitenbereiche 11 der flächigen Erhebung sind im gezeigten Fall leicht schräg ausgebildet.

Nachdem die Kavität 2 mit Schmelze gefüllt ist, wird Stickstoffgas über die Fluideinspritzdüse 6 injiziert. Dadurch bildet sich ein Fluidpolster 8 zwischen dem oberen Plateau 10 der flächigen Erhebung 9 und der Schmelze. Durch den Druck im Fluidpolster werden abkühlungsbedingte Schrumpfungen des Kunststoffmaterials ausgeglichen, d. h. das Kunststoffmaterial liegt an der der flächigen Erhebung 9 gegenüberliegenden Kavitätswandung an, so daß dort eine einwandfreie Oberflächenkontur des Formteils sichergestellt ist.

Um eine Abdichtung zwischen Kavitätswand 7 und oberem Plateau 10 sicherzustellen, sind im Seitenbereich 11 der flächigen Erhebung 9 Temperierelemente 12 angeordnet, mit denen gezielt auf die Erstarrung des Kunststoffs in diesem Bereich hingewirkt werden kann.

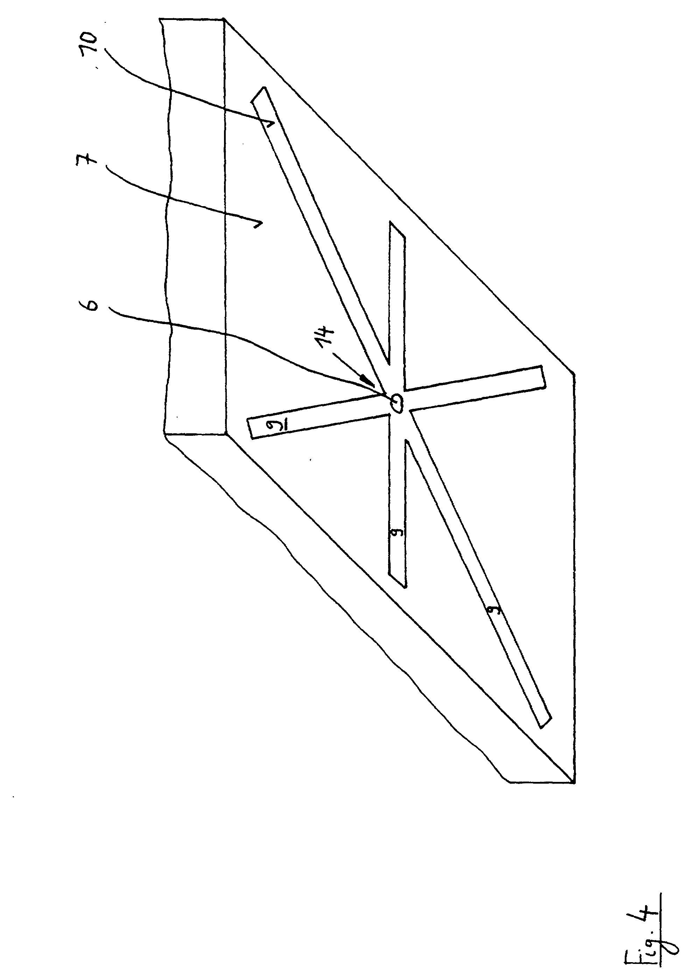

In der Fig. 4 ist zu sehen, wie mehrere flächige Erhebungen 9, die jeweils eine etwa rechteckige Form haben, zusammenwirken und ein sternförmiges Gebilde darstellen. Die einzelnen Erhebungen 9 treffen an einer Zusammenlaufstelle 14 zusammen. Dort ist auch eine einzige Fluideinspritzdüse angeordnet, wenngleich es im allgemeinen auch mehrere sein können. Mit der dargestellten Anordnung kann über weite Bereiche der Kavitätswandung 7 ein Gaspolster zwischen jeweiligem oberen Plateau 10 und Schmelze aufgebracht werden, so daß auf große Teile der Kunststoffschmelze ein Gaspolster aufgebracht wird.

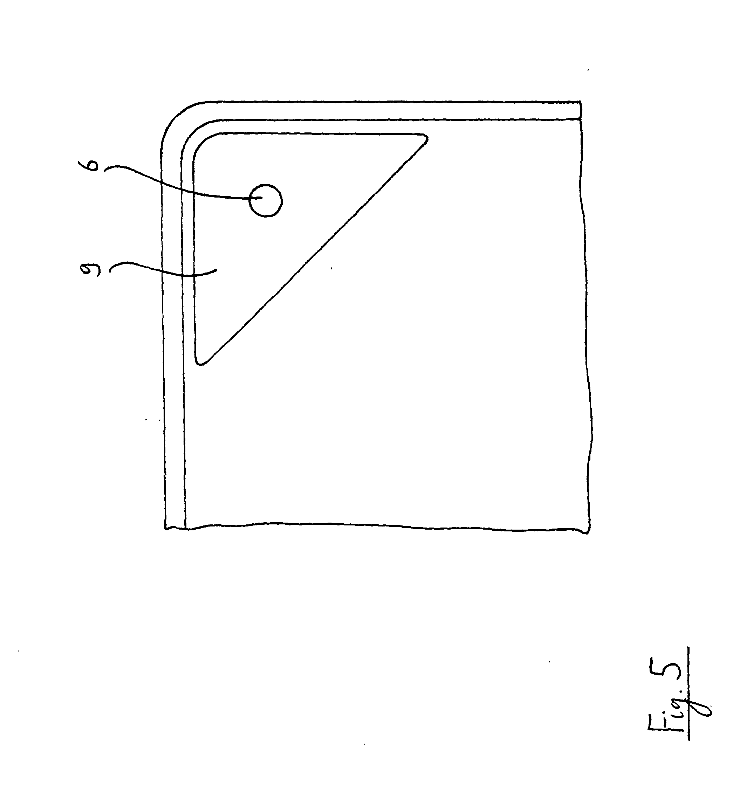

Ein anderer Anwendungsfall ist in Fig. 5 zu sehen. Ein nicht näher bezeichnetes Gehäuse, von dem nur ein Ausschnitt dargestellt ist, soll spritzgegossen werden. Kritisch ist der Eckbereich, weil dort Materialanhäufungen Schädigung der Oberfläche des Formteils durch Volumenkontraktionen begünstigen. Daher ist im Eckbereich eine flächige Erhebung 9 angeordnet, die zentral von einer Gasinjektionsdüse 6 mit Druckgas versorgt wird. Hierdurch wird im gesamten Eckbereich ein Gaspolster erzeugt, so daß es zu keinen Einfallstellen kommt.

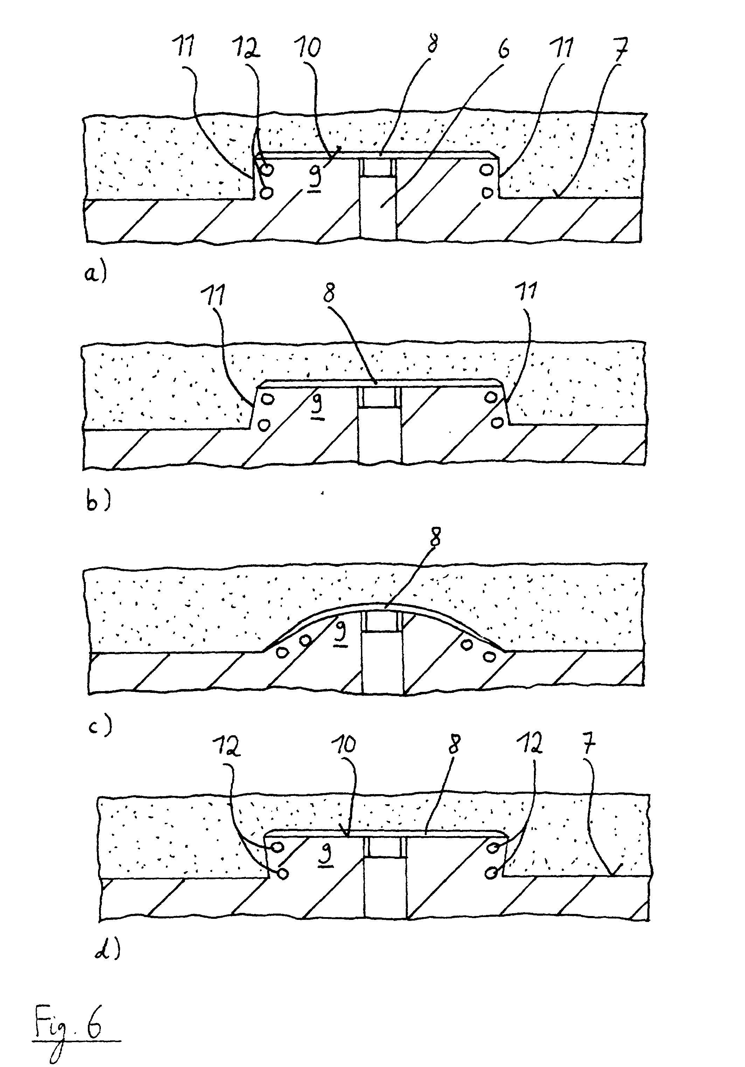

Die spezifische Ausbildung der Seitenbereiche 11 der flächigen Erhebung 9 ist anhand einiger Beispiele in Fig. 6 dargestellt. Fig. 6 a zeigt den einfachsten Fall, nämlich den, daß die flächige Erhebung 9 senkrecht aus der Kavitätswandung 7 herausgehoben ist. Die Gasblase 10, die sich bei Eingasung von Druckfluid über die Fluideinspritzdüse 6 bildet, ist skizziert. Das obere Plateau 10 verläuft parallel zur Kavitätswandung 7.

In Fig. 6 b ist der etwas abgewandelte Fall zu sehen, daß die Seitenbereiche 11 leicht abgeschrägt sind. Dies erleichtert die spätere Entformung des fertigen Formteils,

In Fig. 6 c ist ein anderer Fall zu sehen, wobei hier die flächige Erhebung pilzförmig ausgebildet ist.

Schließlich ist in Fig. 6 d dargestellt, daß auch eine leicht schwalbenschwanzförmige Kontur für die flächige Erhebung 9 möglich ist. Zwar ergibt sich damit ein leichter Hinterschnitt, der die Entformung des fertigen Teils etwas behindert, allerdings hängt dieses Problem von der Elastizität des ausgehärteten Materials ab. Vorteilhafterweise ergibt sich hier jedoch eine besonders gute Abdichtung der Gasblase 8, die im Bereich des oberen Plateaus 10 erzeugt wird, von der Kavitätswandung 7, was in der oben beschriebenen Weise durch Temperierelemente 12 unterstützt wird.

### Bezugszeichenliste:

- 1: Formwerkzeug
- 2: Kavität des Formwerkzeugs
- 3: Kunststoffeinspritzdüse
- 4: Schneckenzylinder
- 5: Schnecke
- 4, 5: Kunststoffplastifizier- und -einspritzeinheit
- 6: Fluideinspritzelement
- 7: Wandung der Kavität 2
- 8: Fluidpolster
- 9: flächige Erhebung
- 10: oberes Plateau der flächigen Erhebung 9
- 11: Seitenbereich der flächigen Erhebung 9
- 12: Temperierelemente
- 13: spaltförmige Öffnung des Fluideinspritzelements 6
- 14: Zusammenlaufstelle der flächigen Erhebungen 9

## Patentansprüche

1. Verfahren zum Spritzgießen von Kunststoffgegenständen aus thermoplastischem, duroplastischem oder elastomerem Material, das die Schritte aufweist:
a) Einspritzen einer ausreichenden Menge Kunststoffschmelze in die Kavität (2) eines Formwerkzeugs (1) entlang eines Schmelzefließwegs, der sich von einer Kunststoffplastifizier- und -einspritzeinheit (4, 5) durch eine Kunststoffeinspritzdüse (3) bis ins Formwerkzeug (1) erstreckt;
b) Eingeben eines Druckfluids, insbesondere eines Druckgases, von einer Wandung (7) der Kavität (2) aus mittels mindestens eines Fluideinspritzelements (6), so daß sich ein Fluidpolster (8) zwischen Wandung (7) der Kavität (2) und der ins Formwerkzeug eingebrachten Schmelze bildet;
c) Erhärtenlassen des so hergestellten Formteils;
d) Entlastung der Kavität (2) vom Druck des Druckfluids; und
e) Entformen des Formteils;
**dadurch gekennzeichnet,**
**daß** im Formwerkzeug (1) mindestens eine flächige Erhebung (9) vorgesehen wird,
die auf der Kavitätswandung (7) aufgebracht ist und
die im Bereich ihres oberen Plateaus (10) weitgehend parallel zur Kavitätswandung (7) in dem Bereich verläuft, in dem die Erhebung (9) angeordnet ist, wobei das Druckfluid derart über mindestens ein Fluideinspritzelement (6) in den Bereich des oberen Plateaus (10) der flächigen Erhebung (9) injiziert wird, daß sich das Fluidpolster (8) zwischen Kunststoff und oberem Plateau (10) der flächigen Erhebung (9) ausbildet.

2. Verfahren nach Anspruch 1, **dadurch gekennzeichnet, daß** die Seitenbereiche (11) der flächigen Erhebung (9) temperiert werden, so daß das Erstarrungsverhalten des Kunststoffes dort beeinflußt werden kann.

3. Verfahren nach Anspruch 2, **dadurch gekennzeichnet, daß** die Seitenbereiche (11) für eine vorbestimmte Zeit beheizt werden.

4. Verfahren nach Anspruch 2, **dadurch gekennzeichnet, daß** die Seitenbereiche (11) für eine vorbestimmte Zeit gekühlt werden.

5. Verfahren nach einem der Ansprüche 1 bis 4, **dadurch gekennzeichnet, daß** das Einspritzen von Schmelze gemäß Schritt a) gemäß Anspruch 1 derart erfolgt, daß vor der Eingabe von Druckfluid zwischen die Wandung (7) der Kavität (2) und die Schmelze gemäß Schritt b) von Anspruch 1 die Werkzeugkavität (2) vollständig mit Schmelze mit einem solchen Schmelzedruck gefüllt wird, daß das Kunststoffmaterial während der ersten Phase der Erstarrung druckvorgespannt bleibt.

6. Verfahren nach einem der Ansprüche 1 bis 5, **dadurch gekennzeichnet, daß** die Zufuhr von Fluid durch das Fluideinspritzelement (6) in Abhängigkeit des in der Kavität (2) herrschenden Drucks und/oder in Abhängigkeit der seit dem Beginn des Einspritzens von Schmelze verstrichenen Zeit und/oder in Abhängigkeit des Einspritzweges der Schnecke (5) gesteuert oder geregelt wird.

7. Verfahren nach einem der Ansprüche 1 bis 6, **dadurch gekennzeichnet, daß** der Druck des Druckfluids, das über das Fluideinspritzelement (6) in die Kavität (2) eingebracht wird, gemäß einem vorgegebenen zeitlichen Profil gesteuert oder geregelt wird.

8. Vorrichtung zum Spritzgießen von Kunststoffgegenständen aus thermoplastischem, duroplastischem oder elastomerem Material, insbesondere zum Durchführen des Verfahrens nach Anspruch 1 bis 7, die aufweist:
- ein aus mindestens zwei Hälften bestehendes Formwerkzeug (1) mit einer Kavität (2);
- eine Kunststoffplastifizier- und -einspritzeinheit (4, 5), die Kunststoffschmelze produziert und von der aus diese Schmelze über eine Kunststoffeinspritzdüse (3) bis in die Kavität (2) des Formwerkzeugs (1) gelangt; und
- mindestens ein Fluideinspritzelement (6), das Druckfluid, insbesondere Druckgas, von einer Wandung (7) der Kavität (2) aus in die Kavität einleitet, so daß sich ein Fluidpolster (8) zwischen Wandung (7) und der ins Formwerkzeug (1) eingebrachten Schmelze bildet,
**gekennzeichnet durch**
mindestens eine flächige Erhebung (9),
die auf der Kavitätswandung (7) aufgebracht ist und
die im Bereich ihres oberen Plateaus (10) weitgehend parallel zur Kavitätswandung (7) in dem Bereich verläuft, in dem die Erhebung (9) angeordnet ist,
wobei in die flächige Erhebung (9) mindestens ein Fluideinspritzelement (6) derart integriert ist, daß sich nach Gasinjektion **durch** das Fluideinspritzelement (6) das Fluidpolster (8) zwischen Kunststoff und oberem Plateau (10) der flächigen Erhebung (9) ausbildet.

9. Vorrichtung nach Anspruch 8, **dadurch gekennzeichnet, daß** im Seitenbereich (11) der flächigen Erhebung (9) Temperierelemente (12) angeordnet sind, mit denen die Temperatur des Kunststoffes dort beeinflußt werden kann.

10. Vorrichtung nach Anspruch 9, **dadurch gekennzeichnet, daß** die Temperierelemente (12) Heizelemente sind.

11. Vorrichtung nach Anspruch 9, **dadurch gekennzeichnet, daß** die Temperierelemente (12) Kühlelemente sind.

12. Vorrichtung nach einem der Ansprüche 8 bis 11, **dadurch gekennzeichnet, daß** die Fluideinspritzdüsen (6) in ihrem Endbereich eine spaltförmige Öffnung (13) aufweisen und die Fluideinspritzdüse (6) so angeordnet ist, daß sie mit dem oberen Plateau (10) der flächigen Erhebung (9) bündig abschließt.

13. Vorrichtung nach einem der Ansprüche 8 bis 11, **dadurch gekennzeichnet, daß** die Fluideinspritzdüsen (6) in ihrem Endbereich aus mikroporösem Metall bestehen und die Fluideinspritzdüse (6) so angeordnet ist, daß sie mit dem oberen Plateau (10) der flächigen Erhebung (9) bündig abschließt.

14. Vorrichtung nach einem der Ansprüche 8 bis 13, **dadurch gekennzeichnet, daß** die flächige Erhebung (9) einen im wesentlichen rechteckigen Grundriß hat.

15. Vorrichtung nach einem der Ansprüche 8 bis 14, **dadurch gekennzeichnet, daß** mehrere flächige Erhebungen (9) an einer Stelle (14) zusammenlaufen.

16. Vorrichtung nach Anspruch 15, **dadurch gekennzeichnet, daß** den mehreren flächigen Erhebungen (9) eine gemeinsame Fluideinspritzdüse (6) zugeordnet ist, die vorzugsweise an der Zusammenlaufstelle (14) angeordnet ist.

## Claims

1. Process for injection moulding of plastic objects of thermoplastic, thermosetting or elastomeric material, which has the steps:
(a)injecting an adequate quantity of plastic melt into the cavity (2) of a mould die (1) along a melt flow path, which extends from a plastic plastifying and injection unit (4, 5) through a plastic injection nozzle (3) into the mould die (1);
(b)adding a compressed fluid, in particular a compressed gas, starting from a wall (7) of the cavity (2) by means of at least one fluid injection element (6), so that a fluid cushion (8) is formed between wall (7) of the cavity (2) and the melt introduced into the mould die;
( c )allowing the moulding thus produced to set;
(d)relieving the cavity (2) of the pressure of the compressed fluid; and
(e)removing the moulding from the mould;
**characterised in that**
in the mould die (1) at least one flat projection (9) is provided
which is attached to the cavity wall (7), and
which in the region of its upper plateau (10) runs largely parallel to the cavity wall (7) in the region in which the projection (9) is arranged,
wherein the compressed fluid is injected via at least one fluid injection element (6) in the region of the upper plateau (10) of the flat projection (9) such that the fluid cushion (8) is formed between plastic and upper plateau (10) of the flat projection (9).

2. Process according to claim 1, **characterised in that** the side regions (11) of the flat projection (9) are tempered so that the solidification behaviour of the plastic may be influenced there.

3. Process according to claim 2, **characterised in that** the side regions (11) are heated for a predetermined time.

4. Process according to claim 2, **characterised in that** the side regions (11) are cooled for a predetermined time.

5. Process according to one of claims 1 to 4, **characterised in that** injecting the melt according to step a) according to claim 1 is effected such that before adding compressed fluid between the wall (7) of the cavity (2) and the melt according to step b) of claim 1, the die cavity (2) is completely filled with melt at such a melt pressure that the plastic material remains pressurebiased during the first phase of solidification.

6. Process according to one of claims 1 to 5, **characterised in that** the supply of fluid through the fluid injection element (6) is controlled or regulated as a function of the pressure prevailing in the cavity (2) and/or as a function of the time elapsed since the start of injection of melt and/or as a function of the injection path of the screw (5).

7. Process according to one of claims 1 to 6, **characterised in that** the pressure of the compressed fluid, which is introduced into the cavity (2) via the fluid injection element (6), is controlled or regulated according to a preset temporal profile.

8. Device for injection moulding of plastic objects of thermoplastic, thermosetting or elastomeric material, in particular for carrying out the process according to claim 1 to 7, which has:
a mould die (1) consisting of at least two halves and having a cavity (2);
a plastic plastifying and injection unit (4, 5), which produces plastic melt and starting from which this melt passes into the cavity (2) of the mould die (1) via a plastic injection nozzle (3); and
at least one fluid injection element (6), which introduces compressed fluid, in particular compressed gas, into the cavity starting from the wall (7) of the cavity (2), so that a fluid cushion (8) is formed between wall (7) and the melt introduced into the mould die (1),
**characterised in that**
at least one flat projection (9),
which is attached to the cavity wall (7), and
which in the region of its upper plateau (10) runs largely parallel to the cavity wall (7) in the region in which the projection (9) is arranged,
wherein at least one fluid injection element (6) is integrated into the flat projection (9) such that after gas injection through the fluid injection element (6), the fluid cushion (8) is formed between plastic and upper plateau (10) of the flat projection (9).

9. Device according to claim 8, **characterised in that** in the side region (11) of the flat projection (9), tempering elements (12) are arranged, by means of which the temperature of the plastic may be influenced there.

10. Device according to claim 9, **characterised in that** the tempering elements (12) are heating elements.

11. Device according to claim 9, **characterised in that** the tempering elements (12) are cooling elements.

12. Device according to one of claims 8 to 11, **characterised in that** the fluid injection nozzles (6) have a gap-like opening (13) in their end region and the fluid injection nozzle (6) is arranged so that it seals flush with the upper plateau (10) of the flat projection (9).

13. Device according to one of claims 8 to 11, **characterised in that** the fluid injection nozzles (6) consist of microporous metal in their end region and the fluid injection nozzle (6) is arranged so that it seals flush with the upper plateau (10) of the flat projection (9).

14. Device according to one of claims 8 to 13, **characterised in that** the flat projection (9) has an essentially rectangular outline.

15. Device according to one of claims 8 to 14, **characterised in that** several flat projections (9) converge at a point (14).

16. Device according to claim 15, **characterised in that** a common fluid injection nozzle (6), which is preferably arranged at the point (14) of convergence, is assigned to the several flat projections (9).

## Revendications

1. Procédé de moulage par injection d'objets en plastique thermoplastique, thermodurcissable ou élastomère, qui présente les étapes suivantes :
a) injection d'une quantité suffisante de plastique fondu dans la cavité (2) d'un moule (1) le long d'un chemin d'écoulement qui s'étend d'un bloc de plastification et d'injection (4, 5), en passant par une buse d'injection (3), jusque dans le moule (1),
b) introduction d'un fluide sous pression, en particulier d'un gaz sous pression, depuis une paroi (7) de la cavité (2) au moyen d'au moins un élément d'injection de fluide (6), de sorte qu'un coussin de fluide (8) se forme entre la paroi (7) de la cavité (2) et la matière fondue introduite dans le moule,
c) durcissement de la pièce moulée ainsi fabriquée,
d) décharge de la cavité (2) de la pression du fluide sous pression, et
e) démoulage de la pièce moulée,
**caractérisé par le fait**
**que** dans le moule (1) est prévue au moins une élévation plate (9)
qui est faite sur la paroi (7) de la cavité et
s'étend dans la zone de son plateau supérieur (10) en grande partie parallèlement à la paroi (7) de la cavité dans la zone dans laquelle l'élévation (9) est placée,
le fluide sous pression étant injecté par au moins un élément d'injection de fluide (6) dans la zone du plateau supérieur (10) de l'élévation plate (9) de façon telle que le coussin de fluide (8) se forme entre le plastique et le plateau supérieur (10) de l'élévation plate (9).

2. Procédé selon la revendication 1, **caractérisé par le fait que** la température des parties latérales (11) de l'élévation plate (9) est réglée, ce qui permet d'influer sur le comportement en matière de solidification du plastique à cet endroit.

3. Procédé selon la revendication 2, **caractérisé par le fait que** les parties latérales (11) sont chauffées pendant un temps déterminé.

4. Procédé selon la revendication 2, **caractérisé par le fait que** les parties latérales (11) sont refroidies pendant un temps déterminé.

5. Procédé selon l'une des revendications 1 à 4, **caractérisé par le fait que** l'injection de matière fondue selon l'étape a) de la revendication 1 est effectuée de façon telle qu'avant l'introduction de fluide sous pression entre la paroi (7) de la cavité (2) et la matière fondue selon l'étape b) de la revendication 1, la cavité (2) du moule soit remplie complètement de matière fondue ayant une pression telle que la matière plastique reste précontrainte sous pression pendant la première phase de la solidification.

6. Procédé selon l'une des revendications 1 à 5, **caractérisé par le fait que** l'envoi de fluide par l'élément d'injection de fluide (6) est commandé ou régulé en fonction de la pression qui règne dans la cavité (2) et/ou en fonction du temps écoulé depuis le début de l'injection de matière fondue et/ou en fonction de la course d'injection de la vis (5).

7. Procédé selon l'une des revendications 1 à 6, **caractérisé par le fait que** la pression du fluide sous pression qui est introduit par l'élément d'injection de fluide (6) dans la cavité (2) est commandée ou régulée suivant un profil temporel fixé.

8. Dispositif de moulage par injection d'objets en plastique thermoplastique, thermodurcissable ou élastomère, en particulier pour la mise en oeuvre du procédé des revendications 1 à 7, qui présente :
- un moule (1) constitué au moins de deux moitiés et ayant une cavité (2),
- un bloc de plastification et d'injection (4, 5) qui produit du plastique fondu et d'où celui-ci va par une buse d'injection (3) jusque dans la cavité (2) du moule (1), et
- au moins un élément d'injection de fluide (6) qui envoie un fluide sous pression, en particulier un gaz sous pression, depuis une paroi (7) de la cavité (2), dans cette cavité, de sorte qu'un coussin de fluide (8) se forme entre la paroi (7) et la matière fondue introduite dans le moule (1),
**caractérisé par**
au moins une élévation plate (9)
qui est faite sur la paroi (7) de la cavité et
s'étend dans la zone de son plateau supérieur (10) en grande partie parallèlement à la paroi (7) de la cavité dans la zone dans laquelle l'élévation (9) est placée,
au moins un élément d'injection de fluide (6) étant intégré à l'élévation plate (9) de façon telle qu'après injection de gaz par l'élément d'injection de fluide (6), le coussin de fluide (8) se forme entre le plastique et le plateau supérieur (10) de l'élévation plate (9).

9. Dispositif selon la revendication 8, **caractérisé par le fait que** dans la partie latérale (11) de l'élévation plate (9) sont placés des éléments de réglage de température (12) qui permettent d'influer sur la température du plastique à cet endroit.

10. Dispositif selon la revendication 9, **caractérisé par le fait que** les éléments de réglage de température (12) sont des éléments chauffants.

11. Dispositif selon la revendication 9, **caractérisé par le fait que** les éléments de réglage de température (12) sont des éléments de refroidissement.

12. Dispositif selon l'une des revendications 8 à 11, **caractérisé par le fait que** les buses d'injection de fluide (6) présentent dans la zone de leur extrémité un orifice en forme de fente (13) et la buse d'injection de fluide (6) est placée de façon à se terminer à fleur du plateau supérieur (10) de l'élévation plate (9).

13. Dispositif selon l'une des revendications 8 à 11, **caractérisé par le fait que** les buses d'injection de fluide (6) sont, dans la zone de leur extrémité, constituées de métal microporeux et la buse d'injection de fluide (6) est placée de façon à se terminer à fleur du plateau supérieur (10) de l'élévation plate (9).

14. Dispositif selon l'une des revendications 8 à 13, **caractérisé par le fait que** l'élévation plate (9) a une projection horizontale sensiblement rectangulaire.

15. Dispositif selon l'une des revendications 8 à 14, **caractérisé par le fait que** plusieurs élévations plates (9) se réunissent à un endroit (14).

16. Dispositif selon la revendication 15, **caractérisé par le fait qu'**aux plusieurs élévations plates (9) est associée une buse commune d'injection de fluide (6) qui est placée de préférence à l'endroit de réunion (14).
